(19) Europäisches Patentamt
European Patent Office
Office européen des brevets

(11) **EP 3 280 214 A1**

(12) **EUROPEAN PATENT APPLICATION**

(43) Date of publication:
**07.02.2018 Bulletin 2018/06**

(51) Int Cl.:
*H04W 74/08* (2009.01)   *H04W 74/00* (2009.01)

(21) Application number: **16290147.4**

(22) Date of filing: **01.08.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ALCATEL LUCENT
92100 Boulogne-Billancourt (FR)**

(72) Inventors:
• **Gacanin, Haris
2018 Antwerpen (BE)**
• **Rostami, Soheil
2018 Antwerpen (BE)**

(74) Representative: **Plas, Axel Ivo Michel
IP HILLS NV
Hubert Frère-Orbanlaan 329
9000 Gent (BE)**

(54) **MANAGING CHANNEL ACCESS OF DEVICES TRANSMITTING DATA TO AN ACCESS POINT IN A WIRELESS NETWORK**

(57)    According to an embodiment a networking device (300) for managing channel access of devices (101, 102) for transmitting data to an access point (100) in a wireless network (110) is disclosed, the device (300) configured to perform the following steps: obtaining (401, 402) transmission parameters of the associated devices (101, 102), calculating (403, 404, 405, 406) from the transmission parameters an upload share indicative for a portion of the total upload that the devices (101, 102) generate and changing (407) for each STA (101, 102), based on the upload share, an access duration indicative for a maximum time the STA (101, 102) can access the channel continuously.

Fig. 1

**Description**

**Technical Field**

The present disclosure relates to the field of managing channel access of networking devices for the transmission of frames to an access point in a wireless network.

**Background**

Each node in a wireless network, a wireless access point, AP, and devices, also named stations or STAs, operating according to the IEEE 802.11 Wi-Fi standard may use channel sensing to gain access to the wireless channel. If the channel is idle for a time equal to an arbitrary inter-frame space, AIFS, a node may transmit a frame to another node. If the channel is busy, the node enters a back off period.

In case the channel is idle, a node has the opportunity to send frames. Frames may further be sent as a sequence of frames separated by a short interframe space, SIFS. The total duration of such a sequence may not exceed a predetermined duration defined by the transmission opportunity parameter, TXOP assigned to each node.

**Summary**

If the total duration of frame-exchange sequences is shorter than the maximum allowed TXOP limit, a node releases the channel and normal contention resumes. This scheme gives shorter total transmission time to higher data-rate STAs and a disproportionately longer transmission time to lower data-rate STAs. This is a drawback because it decreases the overall throughput of all STAs and degrades performance within the wireless network. Another drawback is that an access point can only accurately control channel access in a downlink direction, i.e. from the AP to a STA, and can measure channel access in an uplink direction, i.e. from a STA to the AP, without strictly controlling it on a cumulative basis.

It is an objective of the present disclosure to alleviate the above drawbacks and to provide a solution to improve fairness and the total uplink throughput.

This object is achieved, in a first aspect, by a networking device for managing channel access of devices, STAs, for transmitting data to an access point, AP, in a wireless network, the device comprising an observation module configured to obtain transmission parameters of the STAs; and a calculation module configured to calculate for each STA, from the transmission parameters, an upload share indicative for a portion of the total upload that the STAs generate; and a transmission time module configured to change, for each STA, based on the upload share, an access duration indicative for a maximum time the STA can access the channel continuously.

The network device may for example be the AP or another device connected to the AP. The observation module is a component of this device and will obtain transmission parameters from the STAs that are exchanging data with the AP. These transmission parameters can be for example the total upload that all the STAs generate. Next a second module, the calculation module, will calculate from these transmission parameters an upload share for each STA. This upload share may be indicative for the portion of upload per STA relative to the total upload. Finally, based on this upload share, the transmission time module will change for each STA the maximum time a STA can access the channel for transmitting data to the AP.

Since there are high data-rate STAs and low-rate data STAs and because not every STA needs to transmit the same amount of data to the AP, the access duration to the channel is adapted to the requirement of each STA. As the access duration for each STA is based on the upload share, high data-rate STAs will get a longer access duration than low data-rate STAs. This has the advantage that there is a fair allocation of channel access between the STAs. Furthermore, the overhead for high data-rate STAs will be reduced because they have a longer access duration resulting in an increase of the overall throughput and a reduction in contention.

The transmission parameters comprise for example the amount of sent bytes by the STAs to the AP during an observation time.

In order words, per STA the number of bytes transmitted to the AP are measured during a time interval, namely the observation time.

According to an embodiment, the access duration corresponds to the transmission opportunity parameter (TXOP) according to the IEEE 802.11e standard.

The TXOP corresponds to a time interval during which a STA may transmit data to the AP. If the time interval used to send frames is shorter than the TXOP, for example by a high-rate STA, the channel is released and accessible for other STAs. If a frame is too long to be transmitted in a single TXOP, for example by a low-rate STA, the frame is fragmented into smaller frames. Using this TXOP according to the IEEE 802.11 e standard allows to increase the overall throughput and reduction of contention is an easy and standardized way.

According to an embodiment, the transmission parameters of the STAs are classified per access category, AC, and the calculation module is further configured to calculate an upload share per AC and per STA and the transmission time module is further configured to change the access duration per AC and per STA.

Access categories, ACs, corresponds to level of priorities according to the enhanced distributed channel access, EDCA, protocol. Data frames being part of an AC may thus be classified into high priority, medium priority or low priority traffic. Because transmission parameters are classified into these ACs, the calculation module calculates upload shares taking into account these different priorities. Hence, per STA upload shares are calculated for each AC and the transmission module will change the access duration for each AC in each STA.

The advantage of subdividing the transmission parameters per AC is that the overall throughput in the wireless network is not only managed on the level of the STAs, but that there is an even more fine grained channel access managed because within each STA frames are prioritized according to the AC.

According to an embodiment, the ACs comprise at least one of the group of background, best effort, video and voice. In other words, the four ACs as defined by EDCA are included. Background has the lowest priority queue but requires high throughput. Best effort has medium priority queue and requires medium throughput and delay. Video and voice have the highest priority queue and demand minimum delay.

It is therefore an advantage that based on the requirements of each AC a throughput parameter can be calculated per AC.

According to an embodiment, the upload share is the ratio of the amount of sent bytes during an observation time per STA and per AC over the total sent bytes of the STAs.

During the observation time the sent bytes for each STA are measured and these bytes are further classified per AC. The calculation module also calculates the total sent bytes of all the STAs. For each STA and AC its share is calculated through dividing the sent bytes per STA and per STA by the total amount of sent bytes of all the STAs.

In this way, the sent bytes of each STA and AC are compared to the total amount of sent bytes to the AP in the wireless network. The advantage is that the access duration for each STA and AC, based on the upload share and changed by the transmission time module, is adapted to the relative share to the total amount of sent bytes.

According to a second aspect the disclosure relates to a method for managing channel access of devices, STAs, transmitting data to an access point, AP, in a wireless network, the method comprising obtaining transmission parameters of the STAs; and calculating for each STA, from the transmission parameters, an upload share indicative for a portion of the total upload that the STAs generate; and changing, for each STA, based on the upload share, an access duration indicative for a maximum time the STA can access the channel continuously.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

**Brief Description of the Drawings**

Fig. 1 illustrates a wireless network comprising a networking device for managing channel access, an access point and devices according to an embodiment of the disclosure;

Fig. 2 illustrates a sequence of frames sent by low- and high rate devices to an access point according to an embodiment of the disclosure;

Fig. 3 illustrates a networking device for managing channel access comprising an observation module, a calculation module and a transmission time module according to an embodiment of the disclosure;

Fig. 4 illustrates steps performed by a networking device to manage channel access of devices according to an embodiment of the disclosure;

Fig. 5 illustrates a sequence of frames sent by low- and high rate devices transmitting data packets in accordance with assigned transmission opportunity parameters according to an embodiment of the disclosure; and

Fig. 6 illustrates a suitable computing system for the networking device to manage transmission time according to an embodiment of the disclosure.

**Detailed Description of Embodiment(s)**

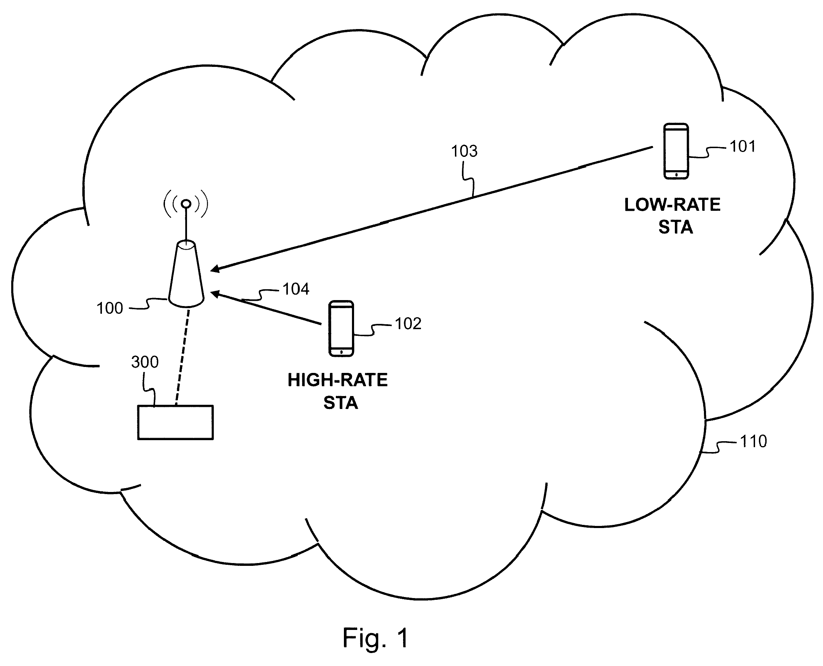

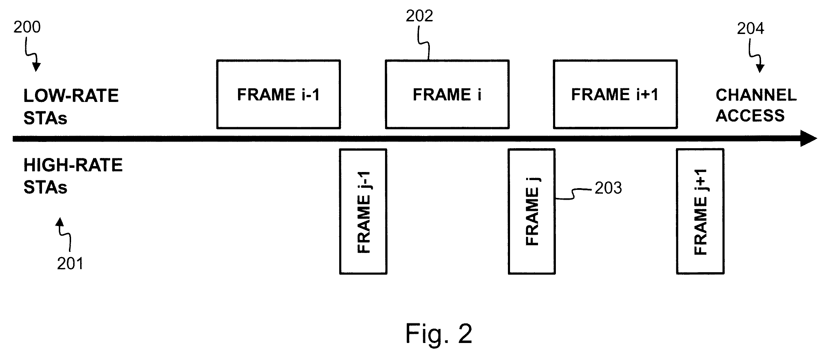

According to an embodiment, the disclosure relates to a networking device for managing channel access of devices (STAs) for transmitting data to an access point (AP) in a wireless network. Figure 1 illustrates such a wireless network 110, comprising such a device 300 for managing channel access, an AP 100 and STAs 101, 102. The AP 100 can for example be used for a Wireless Local Area Network (WLAN), while the STAs are for example smartphones 101, 102. The device 300 can be connected to the AP 100 or can be incorporated into it. The AP 100 and the STAs 101, 102 will exchange frames while operating. The STAs 101, 102 for example will upstream frames to the AP 100 illustrated by 103 and 104. Since however the STAs 101, 102 share the same channel in order to transmit frames, the transmission in the uplink direction, i.e. from a STA 101, 102 to the AP 100, needs to be done in sequences. Figure 2 is an illustration of such frame-exchange sequences from STAs 101, 102 to the AP 100 according to an embodiment of the disclosure.

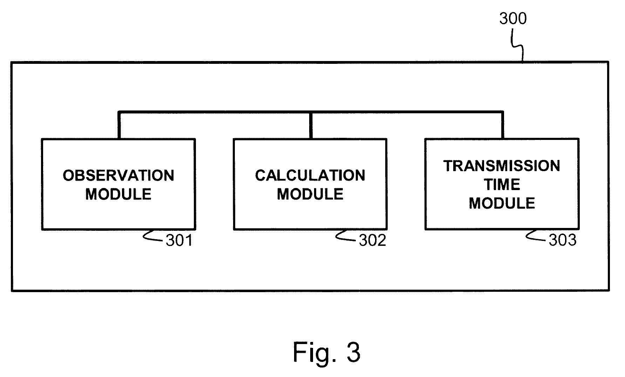

A STA can be located close to the AP, such as STA 102, or relatively further away such as STA 101. If STA 102 is located close to the AP 100, it may need shorter channel access for exchanging frames compared to STA 101 which is located further away from the AP 100 and thus will need relatively more channel access. Hence, STA 102 is labelled a high-rate STA 201, while STA 101 is labelled a low-rate STA 200. If the two STAs 101,102 have the same access priority to transmit frames, such as frame i 202 for STA 101 and frame j 203 for STA 102, to the AP 100, the low-rate STA 101, 200 will need more channel access, represented on the horizontal axis 204, compared to the channel access needed for the high-rate STA 102, 201. As a result, the low-rate STA 101, 200 occupies more the channel 204 then the high-rate STA 102, 201. The channel access 204 will be managed by the networking devices 300 and figure 3 is an illustration of such a device 300.

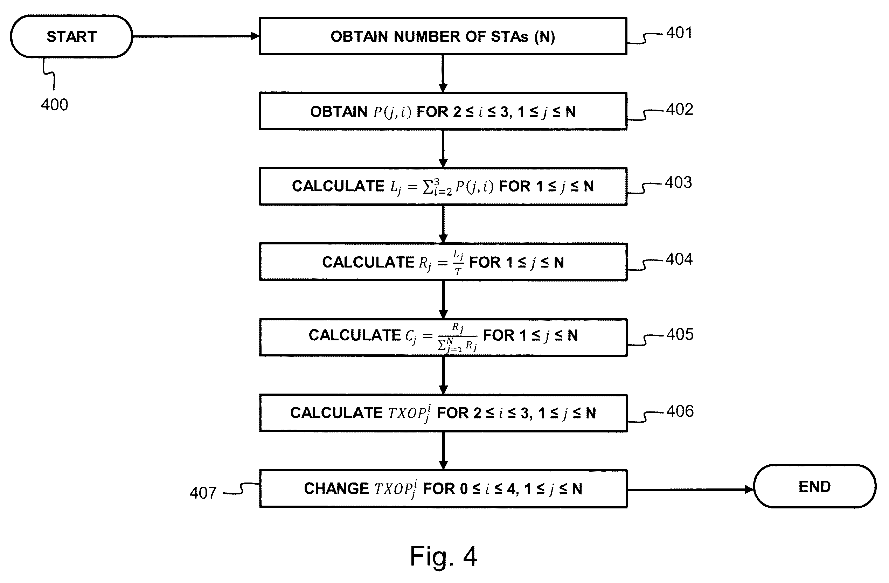

The networking device 300 illustrated in figure 3 comprises an observation module 301, a calculation module 302 and a transmission time module 303 according to an embodiment of the disclosure. The observation module 301 will receive transmission parameters of the STAs 101, 102. Next the calculation module 302 is configured to calculate from the transmission parameters an upload share for each STA 101, 102 which is indicative the portion of the total upload that the STAs generate, such as 202 and 203, during an observation interval. Next the transmission time module 303 will change for each STA 101, 102 the access duration to the channel based on the upload share. These steps performed by the modules are also illustrated in Figure 4.

At the start 400, the received transmission parameters are inter alia the number of STAs, obtained 401 by the observation module 301, and presented as N. Further, per access category, AC, like background, best effort, video and voice, and per STA, the sent bytes are also obtained 402 by the observation module 301 during an observation interval $T$ and presented as $P(j, i)$, with j the number of the STA and $i$ the number of the AC. According to an embodiment of the disclosure, the ACs of video and voice are obtained 402, with $i = 2$ for video and $i = 3$ for voice. Next for each STA the total number of bytes are calculated 403 and presented by $L_j$. Each calculated 403 value is than divided by the observation interval $T$, wherein $T$ can be for example 15 minutes, yielding an average calculated 404 upload share of each STA and presented as $R_j$. Subsequently these calculated 404 average upload shares $R_j$, with $1 \leq j \leq N$, are normalized through dividing each $R_j$ by the total sent bytes of the STAs $\sum_{j=1}^{N} R_j$. The calculated 405 values are in the next step used to calculate 406 a transmission opportunity parameter (TXOP) for each AC per STA. According to an embodiment of the disclosure, the following equations are used to calculate the TXOPs,

$$TXOP_j^i = nTXOP_j^i \times 32\mu s \quad \text{(Eq. 1)},$$

$$nTXOP_j^i = \begin{cases} \left[\left(C_j - \frac{1}{N}\right) \times \left(255 - O_j^i\right)\right] + O_j^i & \text{if} \quad C_j > \frac{1}{N} \\ \left[\left(C_j - \frac{1}{N}\right) \times O_j^i\right] + O_j^i & \text{if} \quad C_j \leq \frac{1}{N} \end{cases} \quad \text{(Eq. 2)},$$

with $O_j^2 = 94$ for video and $O_j^3 = 47$ for voice and wherein [] is the floor function. Finally at the end of the observation interval, for each STA a maximum value for a TXOP per AC is changed 407, namely for the ACs video and voice the values are changed 407 according to Equation 1 combined with Equation 2, while for the ACs background and best effort the maximum values are changed 407 to zero.

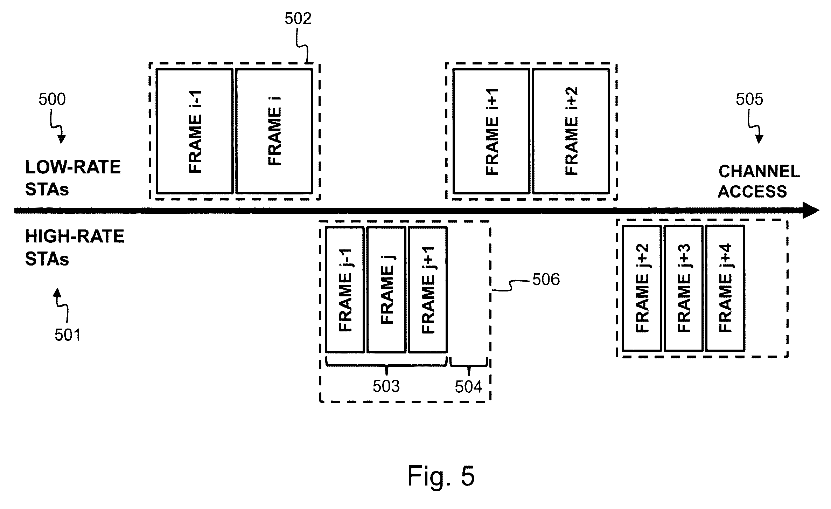

Because the TXOP limits are set for each low- and high- rate STA, they will both have the same probability to access the channel to transmit frames to the AP 100. Figure 5 is an illustration of such a state wherein transmission time for low-rate STAs 500 as well as for high-rate STAs 501 is illustrated. For each STA a TXOP limit is changed 407, illustrated by the dashed box 502 for frames i-1 and i and by the dashed box 506 for frames j-1, j and j+1 p. During this assigned channel access 505, a STA can transmit frames to the AP 100. Low-rate STAs 500 can only occupy the channel during the assigned channel access 502. A high-rate STAs 501 will also send frames, for example frames j-1, j and j+1 503 and releases the channel since no frames need to be send within this assigned TXOP limit 506, presented by the empty space 504.

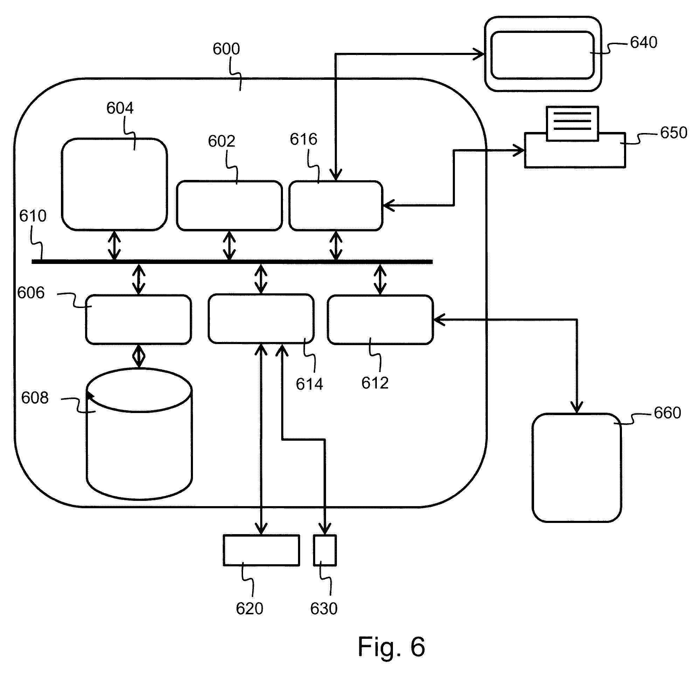

Fig. 6 shows a suitable computing system 600 for performing the steps according to the above embodiments. Computing system 600 may be used as a networking device 300 for managing transmission time utilized by STAs 101, 102 to transmit data to an AP 100. Computing system 600 may in general be formed as a suitable general purpose computer and comprise a bus 610, a processor 602, a local memory 604, one or more optional input interfaces 614, one or more optional output interfaces 616, a communication interface 612, a storage element interface 606 and one or more storage elements 608. Bus 610 may comprise one or more conductors that permit communication among the components of the computing system 600. Processor 602 may include any type of conventional processor or microprocessor that interprets and executes programming instructions. Local memory 604 may include a random access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator to input information to the computing device 600, such as a keyboard 620, a mouse 630, a pen, voice recognition and/or biometric mechanisms, etc. Output interface 616 may comprise one or more conventional mechanisms that output information to the operator, such as a display 640, etc. Communication interface 612 may comprise any transceiver-like mechanism such as for example one or more Ethernet interfaces that enables computing system 600 to communicate with other devices and/or systems 660. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage elements 608 above is described as a local disk, in general any other suitable computer-readable media such as a removable magnetic disk, optical storage media such as a CD or DVD, -ROM disk, solid state drives, flash memory cards, ... could be used. The system 600 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A networking device (300) for managing channel access of devices (STAs) (101, 102) for transmitting data to an access point (AP) (100) in a wireless network (110), the device (300) comprising:

    - an observation module (301) configured to obtain transmission parameters of the STAs; and
    - a calculation module (302) configured to calculate for each STA, from the transmission parameters, an upload share indicative for a portion of the total upload that the STAs generate; and
    - a transmission time module (303) configured to change, for each STA, based on the upload share, an access duration indicative for a maximum time the STA can access the channel continuously.

**2.** Device (300) according to claim 1, wherein the transmission parameters comprise the amount of sent bytes by the STAs (101, 102) to the AP (100) during an observation time.

**3.** Device (300) according to claim 1, wherein the access duration corresponds to the transmission opportunity parameter (TXOP) according to IEEE 802.11e standard.

**4.** Device (300) according to claim 1, wherein the transmission parameters of the STAs are classified per access category (AC) and wherein the calculation module (302) is further configured to calculate an upload share per AC and per STA and wherein the transmission time module (303) is further configured to change the access duration per AC and per STA.

**5.** Device (300) according to claim 4, wherein the access categories (ACs) comprise at least one of the group of:

- background; and
- best effort; and
- video; and
- voice.

**6.** Device (300) according to claim 4, wherein the upload share is the ratio of the amount of sent bytes during an observation time per STA and per AC over the total sent bytes of the STAs.

**7.** Method for managing channel access of devices (STAs) (101, 102) transmitting data to an access point (AP) (100) in a wireless network (110), the method comprising:

- obtaining (401, 402) transmission parameters of the STAs; and
- calculating (403, 404, 405, 406) for each STA, from the transmission parameters, an upload share indicative for a portion of the total upload that the STAs generate; and
- changing (407),for each STA, based on the upload share, an access duration indicative for a maximum time the STA can access the channel continuously.

**8.** A computer program product comprising computer-executable instructions for performing the method according to claim 7 when the program is run on a computer.

**9.** A computer readable storage medium comprising the computer product according to claim 8.

**10.** A data processing system programmed for carrying out the method according to claim 7.

Fig. 1

EP 3 280 214 A1

Fig. 2

EP 3 280 214 A1

300

OBSERVATION
MODULE

301

CALCULATION
MODULE

302

TRANSMISSION
TIME
MODULE

303

Fig. 3

START

400

OBTAIN NUMBER OF STAs (N) — 401

OBTAIN $P(j,i)$ FOR $2 \leq i \leq 3, 1 \leq j \leq N$ — 402

CALCULATE $L_j = \sum_{i=2}^{3} P(j,i)$ FOR $1 \leq j \leq N$ — 403

CALCULATE $R_j = \frac{L_j}{T}$ FOR $1 \leq j \leq N$ — 404

CALCULATE $C_j = \frac{R_j}{\sum_{j=1}^{N} R_j}$ FOR $1 \leq j \leq N$ — 405

CALCULATE $TXOP_j^i$ FOR $2 \leq i \leq 3, 1 \leq j \leq N$ — 406

407 — CHANGE $TXOP_j^i$ FOR $0 \leq i \leq 4, 1 \leq j \leq N$

END

Fig. 4

Fig. 5

Fig. 6

Europäisches
Patentamt

European
Patent Office

Office européen
des brevets

# EUROPEAN SEARCH REPORT

Application Number

EP 16 29 0147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/169339 A1 (CHENG HO-TING [CA] ET AL) 19 June 2014 (2014-06-19) * paragraphs [0024], [0026] * ----- | 1-10 | INV. H04W74/08 ADD. H04W74/00 |
| A | EP 2 645 801 A1 (BRITISH TELECOMM [GB]) 2 October 2013 (2013-10-02) * paragraphs [0023] - [0038] * ----- | 1-10 | |

TECHNICAL FIELDS
SEARCHED (IPC)

H04W

The present search report has been drawn up for all claims

| Place of search | Date of completion of the search | Examiner |
|---|---|---|
| The Hague | 24 January 2017 | Schut, Gerhard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 29 0147

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2017

| Patent document cited in search report | | Publication date | Patent family member(s) | | Publication date |
|---|---|---|---|---|---|
| US 2014169339 | A1 | 19-06-2014 | CN | 105144634 A | 09-12-2015 |
| | | | EP | 2932660 A1 | 21-10-2015 |
| | | | US | 2014169339 A1 | 19-06-2014 |
| | | | WO | 2014089874 A1 | 19-06-2014 |
| EP 2645801 | A1 | 02-10-2013 | EP | 2645801 A1 | 02-10-2013 |
| | | | EP | 2832168 A1 | 04-02-2015 |
| | | | US | 2015043478 A1 | 12-02-2015 |
| | | | WO | 2013144549 A1 | 03-10-2013 |

EPO FORM P0459

For more details about this annex : see Official Journal of the European Patent Office, No. 12/82